# EUROPÄISCHE PATENTSCHRIFT

(11) **EP 1 411 682 B1**
(45) Veröffentlichungstag und Bekanntmachung des Hinweises auf die Patenterteilung: **08.02.2006**
(21) Anmeldenummer: 03022768.0
(22) Anmeldetag: 10.10.2003
(51) Int. Cl.: H04L 12/56

(54) **Modulare Ethernet-Switch Architektur mit G.Links und ohne Adressierung der Schnittstellenmodule**
Modular Ethernet Switch architecture with G.Link and without Interface module addressing
Architecture modulaire d'un commutateur Ethernet avec G.Links et sans adressage des modules d'interface

(30) Priorität: 16.10.2002 DE 10248140
(43) Veröffentlichungstag der Anmeldung: 21.04.2004
(73) Patentinhaber: PHOENIX CONTACT GmbH & Co. Kg, 32825 Blomberg (DE)
(72) Erfinder: Fechner, Kai, Dipl.-Ing., 32756 Detmold (DE); Müller, Martin, Dipl.-Ing., 32676 Lügde (DE); Jasperneite, Jürgen, Dipl.-Ing., 32839 Steinheim (DE)
(74) Vertreter: Bill, Burkart Hartmut

(56) Entgegenhaltungen:
- WO-A-02/41544
- VONNAHME E ET AL: "Measurements in switched Ethernet networks used for automation systems" FACTORY COMMUNICATION SYSTEMS, 2000. PROCEEDINGS. 2000 IEEE INTERNATIONAL WORKSHOP ON PORTO, PORTUGAL 6-8 SEPT. 2000, PISCATAWAY, NJ, USA,IEEE, US, 6. September 2000 (2000-09-06), Seiten 231-238, XP010521815 ISBN: 0-7803-6500-3
- HUBBS B: "A survey of highly integrated Ethernet DataComm devices" AEROSPACE CONFERENCE, 1998 IEEE SNOWMASS AT ASPEN, CO, USA 21-28 MARCH 1998, NEW YORK, NY, USA,IEEE, US, 21. März 1998 (1998-03-21), Seiten 489-498, XP010286906 ISBN: 0-7803-4311-5
- "10/100/1000 Ethernet: Galileo Technology Announces Availability of the first Products in The GalNet-II Architecture Family" EDGE: WORKING GROUP COMPUTING REPORT, [Online] 20. Juli 1998 (1998-07-20), Seiten 1-6, XP002264301 Gefunden im Internet: <URL:http://www.findarticles.com/cf_0/m0WU B/1998_July_20/50170308/p1/article.jhtml> [gefunden am 2003-12-09]

## Beschreibung

Die Erfindung betrifft ein Schnittstellenmodul für einen modular aufbaubaren Ethernet-Switch, einen derartigen Ethernet-Switch sowie ein Verfahren zum modularen Bereitstellen einer Vielzahl von ansteuerbaren Ethernet-Anschlüssen.

Insbesondere in der Automatisierungs-Technik unterliegt die Kommunikation einem Wandel. Der Bedarf für allgemein standardisierte und offengelegte Protokolle wächst zunehmend mit fortschreitender Automatisierung und der damit einher gehenden Notwendigkeit zur Vernetzung unterschiedlichster technischer Einheiten.

Der offene Industriestandard Ethernet findet daher zunehmend Verbreitung und ermöglicht eine übergreifende Kollaboration der unterschiedlichen Netze, wobei darüber transportierbares TCP/IP eine Fernsteuerung, Fernwartung und/oder Fernsensorik bis zur Werkzeugmaschine ermöglicht.

Ein wesentlicher Bestandteil derartiger Ethernet-basierten Netze bilden schaltbare aktive Verteiler, im allgemeinen und nachfolgend Switch genannt, die durch Segmentierung der Netzwerke die Wahrscheinlichkeit von Kollisionen von zu übertragenen Datenpaketen erheblich reduzieren. Auf der Bausteinebene sind heute voll integrierte Switches mit einer Vielzahl von Anschlüssen, sogenannte Multiport-Switches verfügbar.

Die WO 02 41544 A zeigt einen Rückwandplatinenschnittstellenadapter mit Fehlerkontrolle und Redundanter Struktur für einen Hochleistungsnetzwerkswitch. Der redundante Strukturreceiver der Rückwandplatine verbessert die Fähigkeit des Adapters korrekt und widerspruchsfrei schmale Datenpakete tragende Eingabezellen zu empfangen und und breite gestrippte Zellen zu einer Schaltstruktur auszugeben.

Das Dokument "10/1001000 Ethernet: Galileo Technology Announces Availability of the First Products in the GalNet-II Architecture Family, EDGE: WORKING GROUP COMPUTING REPORT, [Online] 20, Juli 1998 (1998-07-20)" beschreibt unter anderem einen 32-Port Fast-Ethernet-Switch, welcher mit vier GT-48310, verbunden mit einem einzigen GT-48300, gebaut werden kann. Mehrfache GT-48300 können sowohl in Peer-To-Peer- als auch in hierarchische Anordnungen kaskadiert werden, um Unterstützung für mehr als vier G.Link-Ports hinzu zufügen.

Diese Ethernet-Switches weisen somit herkömmlicherweise eine vorgegebene Anzahl von mit einer Schaltsteuereinheit verbundenen Ethernet-Schnittstellen und somit im Wesentlichen festgelegte Baugrößen zur Realisierung bestimmter definierter Funktionen auf. Bei notwendiger Erweiterung der Schnittstellen ist folglich ein weiterer kostenintensiver und raumgreifender vollständiger Ethernet-Switch notwendig, auch wenn dieser nicht vollumfänglich genutzt wird.

Ferner sind Ethernet-Switches bekannt, bei denen mittels einer Kreuzkoppeleinrichtung, einem sogenannten Crossbar, eine definierte Anzahl von Schaltsteuereinheiten mit jeweils einer vorgegebenen Anzahl von Ethernet-Schnittstellen separat über eine vielpolige Busleitung, der sogenannten G.Link miteinander verbunden sind. Hierbei ist jedoch eine entsprechende Adressierung zwischen dem Crossbar und der jeweiligen Schaltsteuereinheit, um eine gewünschte Ansteuerung der Schnittstellen zu gewährleisten, notwendig.

Aufgabe der Erfindung ist es, einen neuen und wesentlich verbesserten Weg aufzuzeigen, welcher vorstehend aufgezeigte Probleme und Nachteile des Standes der Technik im wesentlichen ausschließt und insbesondere einen anwendergerechten bzw. anwendungsspezifischen Ethernet-Switch bereitstellt.

Die erfindungsgemäße Lösung der Aufgabe ist durch ein Schnittstellenmodul mit den Merkmalen gemäß Anspruch 13, einen Ethernet-Switch gemäß Anspruch 1 sowie durch ein Verfahren mit den Merkmalen gemäß Anspruch 17 gegeben.

Vorteilhafte und/oder bevorzugte Ausführungsformen bzw. Weiterbildungen sind Gegenstand der jeweiligen Unteransprüche.

Erfindungsgemäß ist somit ein Schnittstellenmodul vorgeschlagen, mit einer ersten Anzahl einer Reihe von Ports und einer zweiten Anzahl einer Reihe von Ports, wobei der in der Reihe der ersten Anzahl von Ports erste Port über eine Datenleitung mit einer an eine Schnittstelleneinrichtung gekoppelte Schalt-Steuereinheit verbunden ist und wobei die nachfolgenden Ports der ersten Anzahl der Reihe von Ports jeweils der Reihe nach über eine Datenleitung mit den Ports der zweiten Anzahl der Reihe von Ports, beginnend mit dem ersten Port in der Reihe der zweiten Anzahl von Ports verbunden sind.

Mit einem derartigen Schnittstellenmodul ist auf überraschend einfache Weise ein Switch mit einer eine Crossbar-Einrichtung umfassenden Kopfeinrichtung und einer Anzahl von nachgeschalteten Schnittstellenmodulen mit jeweils einer ersten Anzahl einer Reihe von Ports und einer zweiten Anzahl einer Reihe von Ports derart aufbaubar, dass jeweils der gleiche in der Reihe der ersten Anzahl von Ports mit einer an eine Schnittstelleneinrichtung, insbesondere einer Ethernet-Schnittstellen umfassende Schnittstelleneinrichtung, gekoppelte Schalt-Steuereinheit verbunden ist und die weiteren Ports der ersten Reihe der ersten Anzahl von Ports, insbesondere kaskadisch über jeweilige Datenleitungen jeweils mit einem Port der zweiten Anzahl der Reihe von Ports verbunden sind.

Aufgrund des damit gewährleisteten modularen Bereitstellens einer Vielzahl von schaltbaren Ethernet-Anschlüssen, in dem eine Crossbar-Einrichtung mit einer Vielzahl von separaten vielpoligen Datenleitungen mit modular aneinanderreihbaren, jeweiligen Ethernet-Anschlüssen zugeordneten Schalt-Steuereinheiten über jeweils eine vordefinierte Datenleitung verbunden wird, wobei jede Schalt-Steuereinheit bevorzugt als Teil eines Schnittstellenmoduls hergestellt wird, derart, dass an ein nachgeschaltetes Schnittstellenmodul zu übertragende Information kaskadenartig durch das jeweils vorgeschaltete Schnittstellenmodul durchgeführt wird, ist eine spezifische Adressierung der jeweiligen Schnittstellenmodule somit nicht mehr notwendig insbesondere, da alle Schnittstellenmodule gleichartig aufgebaut sind und die jeweilige Adressierung durch die Aneinanderschaltung der einzelnen Schnittstellenmodule entsprechend definiert ist.

Überdies ist eine anwendungsspezifische Baugröße aufgrund des modularen Aufbaus gewährleistet, der das Bedürfnis an effizienten, platzsparenden und dennoch kostengünstigen Lösungen, insbesondere im Industriebereich erstmalig zufrieden stellt.

Ein weiterer Vorteil ist darin zu sehen, wenn insbesondere aufgrund des gleichartigen Aufbaus der Schnittstellenmodule die vorzugsweise Ethernet-kompatiblen Schnittstellen noch nicht vordefiniert sind und somit ferner eine applikationsspezifisch höchst flexible, zusätzliche modulare Einsatzvielfalt ermöglicht wird. Erst durch Verbinden einer jeweiligen Schnittstelle mit einem spezifizierenden Schnittstellen-Verwendungsmodul erfolgt somit eine Festlegung der Schnittstelle in Bezug auf eine für die weitere Nutzung und/oder Verarbeitung der an der Schnittstelle bereitgestellten Signale gewünschte und/oder erforderliche Einrichtung. Solche Schnittstellen-Verwendungsmodule umfassen also insbesondere passive Module, zum Beispiel zum Bereitstellen einer herkömmlichen RJ-45 Buchse, aktive, beispielsweise als Übertragungsmedium-Konverter zum Ankoppeln eines optischen Lichtwellenleiters und/oder für eine Funkübertragung ausgebildete Module und als (Zwischen-)Speicher ausgebildete Module.

Die Busleitungen sind hierbei in bevorzugter Ausführung jeweils als separate und vielpolige Busleitungen, sogenannte G.Links, ausgebildet, so dass auch eine Übertragung hoher Datenmengen innerhalb eines Schnittstellenmoduls gewährleistet ist. Die Crossbar-Einrichtung umfasst in zweckmäßiger Weise ferner eine Vielzahl von derartigen Busleitungen, die sternförmig mit jeweils einer Schalt-Steuereinheit verbindbar sind.

In praktischer Weiterbildung umfasst die Kopfeinrichtung ferner eine zusätzliche Schnittstelleneinrichtung, die mittels einer Busleitung direkt, bevorzugt über eine Schalt-Steuereinheit der Kopfeinrichtung, mit der Crossbar-Einrichtung verbunden ist.

Darüber hinaus umfasst die Crossbar-Einrichtung in praktischer Weiterbildung eine PCI (Progammable Communicaton Interface)-Schnittstelle zum Anschalten insbesondere einer Steuereinheit für Managementfunktionen, wie beispielsweise einer CPU. Durch das kaskadische Durchleiten der Daten durch ein jeweiliges Schnittstellenmodul zwischen jeweiligen Eingangs- und Ausgangsports, wobei die Ports bevorzugt derart ausgebildet sind, dass sie sich sowohl als Eingangs- als auch als Ausgangsport eignen, ist der erfindungsgemäße Ethernet-Switch anwenderspezifisch modular aufbaubar und/oder erweiterbar. Die Hochgeschwindigkeits-Busleitungen, insbesondere der Crossbar-Einrichtung, sind ferner in bevorzugter Weiterbildung seriell zur einfachen Zuordnung angeordnet.

Die Erfindung wird nachfolgend anhand einer bevorzugten jedoch beispielhaften Ausführungsform eines erfindungsgemäßen Ethernet-Switches unter Bezugnahme auf die beigefügte Zeichnung näher beschrieben.

In der Zeichnung zeigen:
- Fig. 1: eine schematische Blockdarstellung eines erfindungsgemäß modular aufgebauten Ethernet-Switches mit G.Link ohne Adressierung, und
- Fig. 2, 3 und 4: schematische Blockdarstellungen beispielhafter Festlegungen eines Ethernet-Ports mittels unterschiedlicher Schnittstellen-Verwendungsmodule.

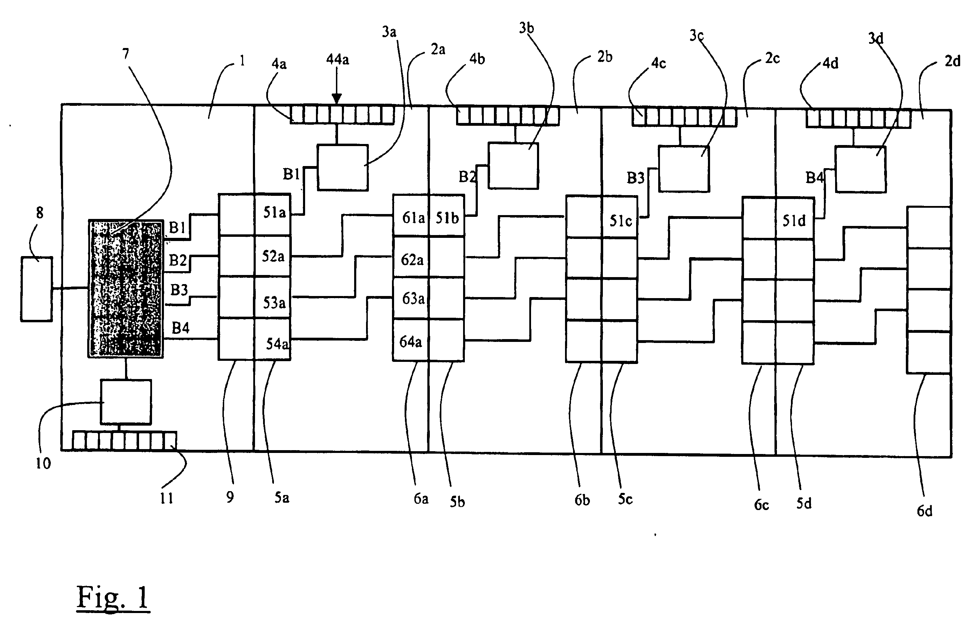

Nachfolgend wird insbesondere auf Fig. 1 Bezug genommen, durch welche ein beispielhafter bevorzugter Ethernet-Switch gemäß der Erfindung schematisch dargestellt ist.

Der dargestellte Ethernet-Switch umfasst eine Kopfstation 1 sowie vier Schnittstellenmodule 2a, 2b, 2c und 2d. Jedes dieser Schnittstellenmodule 2a, 2b, 2c und 2d umfasst eine Schalt-Steuereinheit 3a, 3b, 3c und 3d, die jeweils mit einer vorgegebenen Anzahl von Ethernet-kompatiblen Schnittstellen 4a, 4b, 4c und 4d, im vorliegenden Beispielsfall mit jeweils acht Ethernet-Ports, umfassend ausgebildet sind. Bei Fig. 1 ist an der Schnittstelleneinrichtung 4a beispielhaft einer der acht Ethernet-Ports mit dem Bezugszeichen 44a belegt.

Jeder dieser Ports enthält hierbei somit gemäß nachfolgender Beschreibung bereitgestellte Datensignale, wobei zusätzlich Spannungsversorgungen und Steuersignale bereitgestellt werden. Eine Festlegung der einzelnen Ethernet-Ports erfolgt hinsichtlich der weiteren Nutzung und/oder Verarbeitung der Signale erst durch jeweiliges Anschalten eines applikationsspezifisch-bedingten Schnittstellen-Verwendungsmoduls aus eine Vielzahl von unterschiedlichen Schnittstellen-Verwendungsmodulen. Solche, die Ports spezifizierenden Module umfassen somit insbesondere passive Module, zum Beispiel zum Bereitstellen einer herkömmlichen RJ-45 Buchse, aktive, beispielsweise als Übertragungsmedium-Konverter zum Ankoppeln eines optischen Lichtwellenleiters ausgebildete Module und/oder als (Zwischen-)Speicher ausgebildete Module.

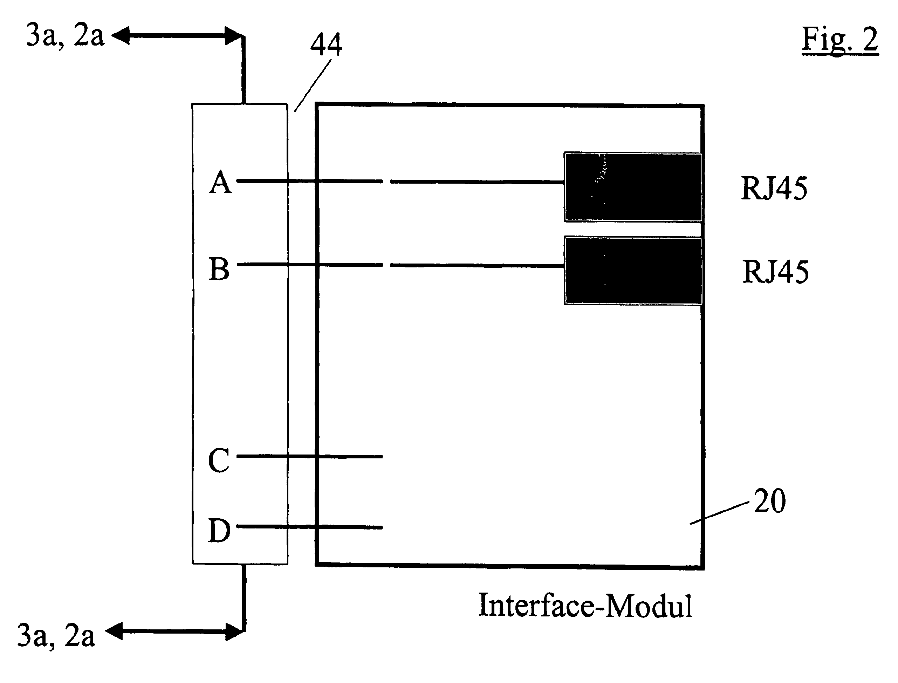

Die Fig. 2 bis 4 zeigen beispielhaft an einem Multifunktionsport 44 der Schnittstelleneinrichtung 4a der Fig. 1 drei unterschiedliche, applikationsspezifische Festlegungen von Ethernet-Ports 44a mittels spezifischen, in den Fig. 2 bis 4 als Interface-Modul bezeichneten Schnittstellen-Verwendungsmodulen 20, wobei der Multifunktionsport 44 zumindest einen, im vorliegenden Beispiel zwei Ethernet-Ports 44a, Steuersignale und eine Spannungsversorgung enthält.

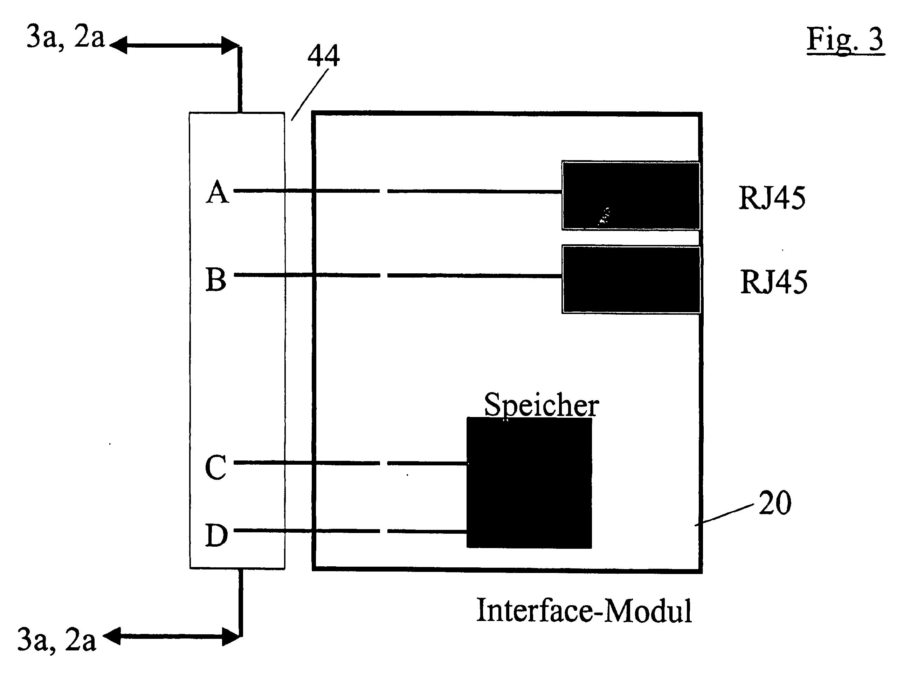

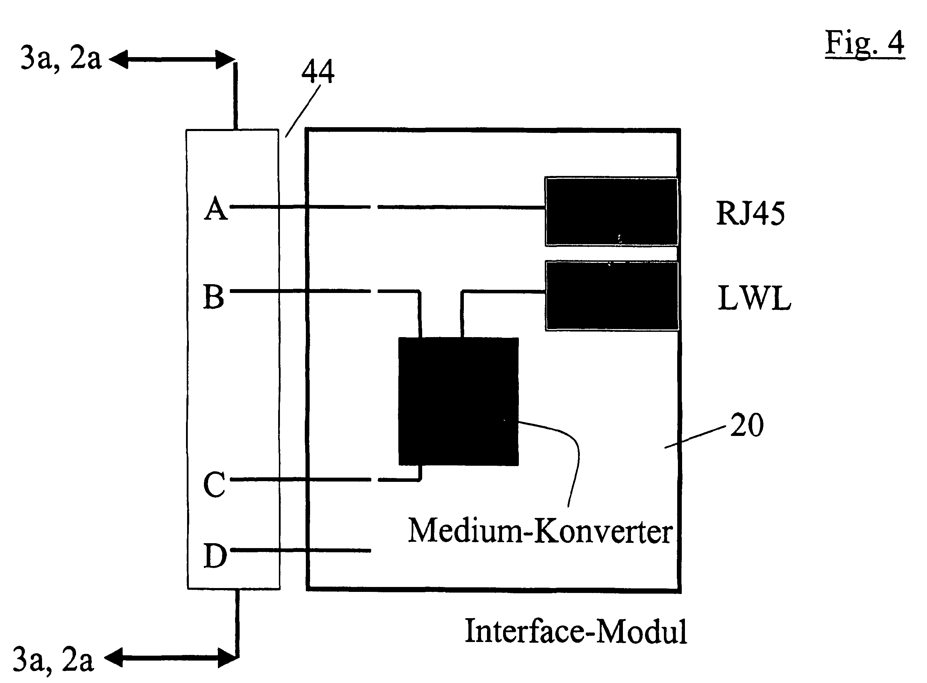

Der Multifunktionsport 44 weist im vorliegenden Beispiel vier integrierte, mehradrige Steckverbinderanschlüsse A, B, C und D auf. An den Anschlüssen A und B liegen gemäß nachfolgender Beschreibung bereitgestellte Datensignale der Ethernet-Ports 44a an, an C die Spannungsversorgung und über D wird von einer Managementeinrichtung 8 (Fig. 1) eine zusätzliche Logikschnittstelle zur Verfügung gestellt. Das bei Fig. 2 mit dem Multifunktionsport 44 verbundene Schnittstellen-Verwendungsmodul 20 stellt folglich über die Anschlüsse A und B zwei herkömmliche RJ-45 Buchsen bereit. Das bei Fig. 3 mit dem Multifunktionsport 44 verbundene Schnittstellen-Verwendungsmodul 20 stellt gleichfalls über die Anschlüsse A und B zwei herkömmliche RJ-45 Buchsen bereit und umfasst ferner einen mit den Anschlüssen C und D gekoppelten Speicher. Das bei Fig. 4 mit dem Multifunktionsport 44 verbundene Schnittstellen-Verwendungsmodul 20 stellt über den Anschluss A eine RJ-45 Buchse bereit und umfasst ferner einen mit den Anschlüssen B und C gekoppelten Übertragungsmedium-Konverter, so dass zusätzlich zur RJ-45 Buchse eine LWL-Buchse zum Ankoppeln eines Lichtwellenleiters bereitgestellt wird.

Unter nachfolgender Bezugnahme insbesondere wieder auf Fig. 1, ist jedes Schnittstellenmodul 2a, 2b, 2c bzw. 2d mit einer Anzahl von als Eingangsports dienenden Ports 5a, 5b, 5c bzw. 5d und einer Anzahl von als Ausgangsports dienenden Ports 6a, 6b, 6c bzw. 6d hergestellt. Die Schalt-Steuereinheit 3a, 3b, 3c bzw. 3d eines jeweiligen Schnittstellenmoduls 2a, 2b, 2c bzw. 2d ist über eine Datenleitverbindung an jeweils den gleichen Port der Anzahl von Eingangsports 5a, 5b, 5c bzw. 5d des betreffenden Schnittstellenmoduls angeschaltet.

Im vorliegenden Fall ist die Schalt-Steuereinheit 3a, 3b, 3c bzw. 3d jeweils über eine separate vielpolige Busleitung an den jeweils ersten Eingangsport 51a, 51b, 51c bzw. 51d angeschaltet.

Die jeweils nachfolgenden Ports 52, 53 und 54 der Anzahl von Eingangsports 5a, 5b, 5c bzw. 5d sind mit der Anzahl der Ausgangsports 6a, 6b, 6c bzw. 6d des jeweiligen Schnittstellenmoduls 2a, 2b, 2c bzw. 2d über eine vorgegebene kaskadische Anordnung verbunden.

Im vorliegenden Beispielsfall ist der jeweilige, an zweiter Position angeordnete Eingangsport 52 mit dem ersten Ausgangsport 61, der dritte Eingangsport 53 mit dem zweiten Ausgangsport 62 und der vierte Eingangsport 54 mit dem dritten Ausgangsport 63 verbunden.

Die Kopfstation 1 umfasst ferner eine Kreuzkoppeleinrichtung oder einen Crossbar 7, der eine PCI-Schnittstelle zu einer hierüber verbindbaren Managementeinrichtung 8, wie einer CPU, beispielhaft umfasst. Der Crossbar 7 weist ferner eine Vielzahl vielpoliger interner Busleitungen auf, die seriell an wenigstens eine Ausgangsportleiste 9 der Kopfstation 1 angeschaltet sind. Herkömmlicherweise stellen die Crossbar-Einrichtungen 7 des heutigen Standes der Technik vier bis zwölf interne Hochgeschwindigkeits- Busleitungen, sogenannte G.Links bereit. Die Eingangsports 5a, 5b, 5c bzw. 5d der Schnittstellenmodule 2a, 2b, 2c bzw. 2d sind hierbei praktischerweise entsprechend komplementär zur der Ausgangsportleiste 9 der Kopfstation angepasst.

Die Kopfstation 1 umfasst bevorzugt ferner wenigstens eine weitere eigene Schalt-Steuereinheit 10, die mit einer entsprechend vorgewählten Schnittstelleneinrichtung 11, im vorliegenden Fall wiederum eine acht Ethernet-Ports umfassende Schnittstelleneinrichtung verbunden ist, deren Spezifizierung zweckmäßigerweise wiederum erst durch Anschließen eines individuellen Schnittstellen-Verwendungsmoduls erfolgt.

Der Crossbar 7 ist die übergeordnete Komponente, die mit jeder Schalt-Steuereinheit 3a, 3b, 3c und 3d über jeweils eine der separaten vielpoligen internen Busleitungen verbunden ist. Der Crossbar ist eingangsseitig herkömmlicher Weise mit einer nicht dargestellten Netzkomponente, wie beispielsweise einer vorgeschalteten Kreuzkoppeleinrichtung verbunden. Alle von dem Crossbar 7 weiterführenden vielpoligen Busse bzw. G.Link-Verbindungen, die somit eine quasi sternförmige Verbindung zwischen weiteren Schalt- und/oder Steuereinheiten und dem Crossbar 7 bereitstellen, sind durch das erste Schnittstellenmodul 2a kaskadisch geführt, mit Ausnahme des in der Fig. 1 oben angeordneten, am Eingangsport 51a angeschalteten Busses. Dieser wird direkt zur im Schnittstellenmodul 2a vorhandenen Schalt-Steuereinheit 3a geführt. Die restlichen durchgeführten Busse sind an der Ausgangsportleiste 6a derart angeordnet, dass der eingangsseitig zweite Bus der ausgangsseitig erste Bus wird, der auf eingangsseitig dritte Bus ausgangsseitig zweite Bus wird usw.

Das dem Schnittstellenmodul 2a angeschlossene weitere Modul 2b ist wiederum über seinen oberen, am Eingangsport 51b angeschalteten Bus mit der Schalt-Steuereinheit 3a verbunden.

Mit anderen Worten ist der im Schnittstellenmodul 2a eingangsseitig an zweiter Position und ausgangsseitig an erster Position angeordnete Bus im Schnittstellenmodul 2b direkt zur Schalt-Steuereinheit 3b geführt.

Die anderen Busse werden wiederum kaskadisch im Schnittstellenmodul 2b durchgeführt. Da der Aufbau der einzelnen Module 2a, 2b, 2c und 2d im Wesentlichen identisch ist, folglich in der vorstehend, in Bezug auf das Schnittstellenmodul 2a beschriebenen Art und Weise.

Eine wesentliche Folge hierdurch ist insbesondere, dass die erste Schalt-Steuereinheit 3a des ersten Schnittstellenmoduls 2a mit dem Crossbar 7 über die erste G.Link-Verbindung B1 verbunden ist, die zweite Schalt-Steuereinheit 3b des zweiten Schnittstellenmoduls 2b bzw. die dritte und vierte Schalt-Steuereinheit 3c, 3d des jeweils nachfolgenden Schnittstellenmoduls 2c, 2d am zweiten Bus B2 des Crossbar 7 bzw. am jeweils entsprechend nachfolgenden dritten und vierten Bus B3 bzw. B4 des Crossbar 7 angeschlossen ist.

Eine zusätzliche Adressierung der einzelnen Schnittstellenmodule selbst ist somit nicht mehr notwendig, insbesondere da diese durch die Aneinanderschaltung der einzelnen Schnittstellenmodule 2a, 2b, 2c, 2d entsprechend definiert ist. Alle Schnittstellenmodule sind gleichartig aufgebaut und können somit platzsparend und kostengünstig, insbesondere bei der Steuertechnik im Industriebereich, praktischer Weise für Eingabe/Ausgabe Stationen eingesetzt werden.

Die maximale Begrenzung des erfindungsgemäßen Ethernet-Switches ist hierbei durch die Kreuzkoppeleinrichtung 7 basierend auf der bereitgestellten Anzahl von G.Link-Verbindungen gegeben, wobei die Anzahl der Eingangs- und Ausgangsport 5a-5d bzw. 6a-6d zum Durchleiten einer größeren Anzahl von Busleitungen im Vergleich zu der in Fig. 1 dargestellten Anzahl vor vier Busleitungen entsprechend anzupassen ist.

## Patentansprüche

1. Ethernet-Switch umfassend eine Kopfeinrichtung (1) mit einer Crossbar-Einrichtung (7) und einer Anzahl von über Datenleitungen (1,B1; 1,B2; 1, B3; 1,B4) nachgeschalteten Schnittstellenmodulen (2a, 2b, 2c, 2d), mit jeweils einer ersten Anzahl einer Reihe (5a, 5b, 5c, 5d) von Ports und einer zweiten Anzahl einer Reihe (6a, 6b, 6c, 6d) von Ports derart, dass jeweils der gleiche (51a, 51b, 51c, 51d) in der Reihe (5a, 5b, 5c, 5d) der ersten Anzahl von Ports mit einer an eine Schnittstelleneinrichtung (4a, 4b, 4c, 4d) gekoppelte Schalt-Steuereinheit (3a, 3b, 3c, 3d) verbunden ist und die weiteren Ports (52a, 53a, 54a) der Reihe (5a, 5b, 5c, 5d) der ersten Anzahl von Ports, jeweils über kaskadisch geführte Datenleitungen mit einem Port der zweiten Anzahl der Reihe (6a, 6b, 6c, 6d) von Ports verbunden sind.

2. Ethernet-Switch nach vorstehendem Anspruch, wobei die nachfolgenden Ports (52a, 53a, 54a) der Reihe (5a, 5b, 5c, 5d) der ersten Anzahl von Ports jeweils mittels wenigstens einer Datenleitung der Reihe nach mit den Ports (61a, 62a, 63a) der Reihe (6a, 6b, 6c, 6d) der zweiten Anzahl von Ports, beginnend mit dem ersten (61a) in der Reihe (6a, 6b, 6c, 6d) der zweiten Anzahl von Ports verbunden sind.

3. Ethernet-Switch nach einem der beiden vorstehenden Ansprüche, wobei die Datenleitungen (B1, B2, B3, B4) Busleitungen umfassen.

4. Ethernet-Switch nach vorstehendem Anspruch, wobei die Crossbar-Einrichtung (7) eine Vielzahl von Busleitungen umfasst, die sternförmig mit jeweils einer Schalt-Steuereinheit (3a, 3b, 3c, 3d) verbunden sind.

5. Ethernet-Switch nach einem der vorstehenden Ansprüchen, wobei die Kopfeinrichtung (1) eine Schnittstelleneinrichtung (11) umfasst, die mittels einer Busleitung direkt oder über eine Schalt-steuereinheit (9) der Kopfeinrichtung (1) mit der Crossbar-Einrichtung (7) verbunden ist.

6. Ethernet-Switch nach einem der vorstehendem Ansprüche, wobei die Schnittstelleneinrichtung (4a, 4b, 4c, 4d, 11) eine Anzahl von Ethernet-Schnittstellen umfasst.

7. Ethernet-Switch nach einem der vorstehenden Ansprüche, umfassend wenigstens ein an wenigstens eine Schnittstelleneinrichtung (4a, 4b, 4c, 4d, 11) angeschlossenes Schnittstellen-Verwendungsmodul (20) zur Spezifizierung wenigstens einer Schnittstelle (44a).

8. Ethernet-Switch nach vorstehendem Anspruch, wobei das Schnittstellen-Verwendungsmodul (20) als aktives, passives und/oder als (Zwischen-)Speichermodul ausgebildet ist.

9. Ethernet-Switch nach einem der vorstehenden Ansprüche, wobei die Datenleitungen (B1, B2, B3, B4) jeweils als separate, vielpolige G.Link-Verbindungen ausgebildet sind.

10. Ethernet-Switch nach einem der vorstehenden Ansprüche, wobei die Crossbar-Einrichtung (7) eine PCI-Schnittstelle zum Anschalten einer Managementfunktions-Einrichtung (8) umfasst.

11. Ethernet-Switch nach einem der vorstehenden Ansprüche, wobei der Aufbau des Ethernet-Switches modular aufgebaut und/oder erweiterbar ist.

12. Ethernet-Switch nach einem der vorstehenden Ansprüche 3 bis 10, wobei die Busleitungen seriell angeordnet sind.

13. Schnittstellenmodul (2a, 2b, 2c, 2d) zur Verwendung in einer Ethernet-Switch nach einem der vorstehenden Ansprüche, umfassend:
eine erste Anzahl einer Reihe (5a, 5b, 5c, 5d) von Ports (51a, 52a, 53a, 54a, 51b, 51c, 51d) und eine zweite Anzahl einer Reihe (6a, 6b, 6c, 6d) von Ports (61a, 62a, 63a, 64a), wobei
der in der Reihe (5a, 5b, 5c, 5d) der ersten Anzahl von Ports (51a, 52a, 53a, 54a, 51b, 51c, 51d) erste Port (51a, 51b, 51c, 51d) über wenigstens eine Datenleitung (2a,B1; 2b,B2; 2c,B3; 2d,B4) mit einer, an eine Schnittstelleneinrichtung (4a, 4b, 4c, 4d) angeschaltete Schalt-Steuereinheit (3a, 3b, 3c, 3d) verbunden ist, und wobei
die nachfolgenden Ports (52a, 53a, 54a) der Reihe (5a, 5b, 5c, 5d) der ersten Anzahl von Ports jeweils mittels wenigstens einer Datenleitung der Reihe nach mit den Ports (61a, 62a, 63a, 64a) der Reihe (6a, 6b, 6c, 6d) der zweiten Anzahl von Ports, beginnend mit dem ersten (61a) in der Reihe (6a, 6b, 6c, 6d) der zweiten Anzahl von Ports verbunden sind.

14. Schnittstellenmodul nach vorstehendem Anspruch, wobei die Schnittstelleneinrichtung (4a, 4b, 4c, 4d, 11) eine Anzahl von Ethernet-Schnittstellen umfasst.

15. Schnittstelleneinrichtung nach einem der beiden vorstehenden Ansprüche, wobei eine Schnittstellenspezifizierung der Schnittstelleneinrichtung (4a, 4b, 4c, 4d) über wenigstens ein an die Schnittstelleneinrichtung anzuschließendes Schnittstellen-Verwendungsmodul (20) erfolgt.

16. Schnittstellenmodul nach einem der vorstehenden Ansprüche 13 bis 15, wobei Datenleitungen (B1, B2, B3, B4) als separate und vielpolige Busleitungen ausgebildet sind.

17. Verfahren zum Bereitstellen einer Vielzahl von schaltbaren Schnittstelleneinrichtungen (4a, 4b, 4c, 4d), wobei eine Crossbar-Einrichtung (7), welche eine Vielzahl von separaten vielpoligen Datenleitungen (B1, B2, B3, B4) umfasst, mit modular aneinanderreihbaren, jeweiligen Schnittstelleneinrichtungen (4a, 4b, 4c, 4d) zugeordneten, Schalt-Steuereinheiten (3a, 3b, 3c, 3d) über jeweils eine vordefinierte Datenleitung (B1, B2, B3, B4) verbunden wird und bei welchem jede Schalt-Steuereinheit (3a, 3b, 3c, 3d) als Teil eines Schnittstellenmoduls (2a, 2b, 2c, 2d) hergestellt wird, derart, dass die von der Crossbar-Einrichtung (7) an ein nachgeschaltetes Schnittstellenmodul (2b, 2c, 2d) zu übertragende Information über eine kaskadische Anordnung durch das jeweils vorangeschaltete Schnittstellenmodul (2a, 2b, 2c) geführt wird.

18. Verfahren nach vorstehendem Anspruch, bei welchem die Schnittstelleneinrichtung (4a, 4b, 4c, 4d) als ein Ethernet-Anschluss bereitgestellt wird.

19. Verfahren nach vorstehendem Anspruch, bei welchem die Vielzahl von Ethernet-Anschlüssen durch Anschalten von Schnittstellen-Verwendungsmodulen (20) festgelegt wird.

## Revendications

1. Commutateur Ethernet comprenant un dispositif de tête (1), comportant un dispositif à barres croisées (Crossbar) (7), et un certain nombre de modules d'interface (2a, 2b, 2c, 2d) connectés en aval par l'intermédiaire de lignes de données (1,B1 ; 1,B2 ; 1,B3 ; 1,B4) et dotés chacun d'un premier nombre d'une rangée (5a, 5b, 5c, 5d) de points d'accès (ports) et d'un deuxième nombre d'une rangée (6a, 6b, 6c, 6d) de points d'accès de sorte que, chaque fois, le même (51a, 51b, 51c, 51d) dans la rangée (5a, 5b, 5c, 5d) du premier nombre de points d'accès soit relié à une unité de commande de commutation (3a, 3b, 3c, 3d) couplée à un dispositif d'interface (4a, 4b, 4c, 4d) et que les autres points d'accès (52a, 53a, 54a) de la rangée (5a, 5b, 5c, 5d) du premier nombre de points d'accès soient chaque fois reliés, par l'intermédiaire de lignes de données montées en cascade, à un point d'accès du deuxième nombre de la rangée (6a, 6b, 6c, 6d) de points d'accès.

2. Commutateur Ethernet selon la revendication précédente, dans lequel les points d'accès suivants (52a, 53a, 54a) de la rangée (5a, 5b, 5c, 5d) du premier nombre de points d'accès sont reliés dans l'ordre, chaque fois au moyen d'au moins une ligne de données, aux points d'accès (61a, 62a, 63a) de la rangée (6a, 6b, 6c, 6d) du deuxième nombre de points d'accès, et ce en commençant par le premier (61a) dans la rangée (6a, 6b, 6c, 6d) du deuxième nombre de points d'accès.

3. Commutateur Ethernet selon l'une des deux revendications précédentes, dans lequel les lignes de données (B1, B2, B3, B4) comprennent des lignes de bus.

4. Commutateur Ethernet selon la revendication précédente, dans lequel le dispositif à barres croisées (7) comprend une pluralité de lignes de bus qui sont reliées, en étoile, chaque fois à une unité de commande de commutation (3a, 3b, 3c, 3d).

5. Commutateur Ethernet selon l'une des revendications précédentes, dans lequel le dispositif de tête (1) comprend un dispositif d'interface (11) qui est relié, au moyen d'une ligne de bus, directement ou par l'intermédiaire d'une unité de commande de commutation (9) du dispositif de tête (1), au dispositif à barres croisées (7).

6. Commutateur Ethernet selon l'une des revendications précédentes, dans lequel le dispositif d'interface (4a, 4b, 4c, 4d, 11) comprend un certain nombre d'interfaces Ethernet.

7. Commutateur Ethernet selon l'une des revendications précédentes, comprenant au moins un module d'application formant interface (20) raccordé à au moins un dispositif d'interface (4a, 4b, 4c, 4d, 11) et servant à spécifier au moins une interface (44a).

8. Commutateur Ethernet selon la revendication précédente, dans lequel le module d'application formant interface (20) est réalisé sous forme de module actif, passif et/ou de mémoire (tampon).

9. Commutateur Ethernet selon l'une des revendications précédentes, dans lequel les lignes de données (B1, B2, B3, B4) sont chacune réalisées sous forme de liaisons G-Link multipolaires séparées.

10. Commutateur Ethernet selon l'une des revendications précédentes, dans lequel le dispositif à barres croisées (7) comprend une interface PCI servant à connecter un dispositif assurant des fonctions de gestion (8).

11. Commutateur Ethernet selon l'une des revendications précédentes, dans lequel l'architecture du commutateur Ethernet est modulaire et/ou peut être agrandie.

12. Commutateur Ethernet selon l'une des revendications précédentes 3 à 10, dans lequel les lignes de bus sont disposées en série.

13. Module d'interface (2a, 2b, 2c, 2d) destiné à être utilisé dans un commutateur Ethernet selon l'une des revendications précédentes, comprenant :
un premier nombre d'une rangée (5a, 5b, 5c, 5d) de points d'accès (51a, 52a, 53a, 54a, 51b, 51c, 51d) et un deuxième nombre d'une rangée (6a, 6b, 6c, 6d) de points d'accès (61a, 62a, 63a, 64a),
le premier point d'accès (51a, 51b, 51c, 51d) dans la rangée (5a, 5b, 5c, 5d) du premier nombre de points d'accès (51a, 52a, 53a, 54a, 51b, 51c, 51d) étant relié, par l'intermédiaire d'au moins une ligne de données (2a,B1 ; 2b,B2 ; 2c,B3 ; 2d,B4), à une unité de commande de commutation (3a, 3b, 3c, 3d) connectée à un dispositif d'interface (4a, 4b, 4c, 4d), et
les points d'accès suivants (52a, 53a, 54a) de la rangée (5a, 5b, 5c, 5d) du premier nombre de points d'accès étant reliés dans l'ordre, chaque fois au moyen d'au moins une ligne de données, aux points d'accès (61a, 62a, 63a, 64a) de la rangée (6a, 6b, 6c, 6d) du deuxième nombre de points d'accès, et ce en commençant par le premier (61a) dans la rangée (6a, 6b, 6c, 6d) du deuxième nombre de points d'accès.

14. Module d'interface selon la revendication précédente, dans lequel le dispositif d'interface (4a, 4b, 4c, 4d, 11) comprend un certain nombre d'interfaces Ethernet.

15. Dispositif d'interface selon l'une des deux revendications précédentes, dans lequel une spécification d'interface du dispositif d'interface (4a, 4b, 4c, 4d) a lieu par l'intermédiaire d'au moins un module d'application formant interface (20) à raccorder au dispositif d'interface.

16. Module d'interface selon l'une des revendications précédentes 13 à 15, dans lequel les lignes de données (B1, B2, B3, B4) sont réalisées sous forme de lignes de bus séparées et multipolaires.

17. Procédé de mise à disposition d'une pluralité de dispositifs d'interface commutables (4a, 4b, 4c, 4d), dans lequel on relie un dispositif à barres croisées (7) comprenant une pluralité de lignes de données multipolaires séparées (B1, B2, B3, B4), chaque fois par l'intermédiaire d'une ligne de données prédéfinie (B1, B2, B3, B4), à des unités de commande de commutation (3a, 3b, 3c, 3d) qui peuvent être alignées les unes à côté des autres de manière modulaire et qui sont associées à des dispositifs d'interface respectifs (4a, 4b, 4c, 4d), et dans lequel chaque unité de commande de commutation (3a, 3b, 3c, 3d) est fabriquée sous forme de partie d'un module d'interface (2a, 2b, 2c, 2d) de telle sorte que l'information à transmettre du dispositif à barres croisées (7) à un module d'interface (2b, 2c, 2d) connecté en aval passe, par l'intermédiaire d'un montage en cascade, à travers le module d'interface (2a, 2b, 2c) chaque fois connecté avant.

18. Procédé selon la revendication précédente, dans lequel le dispositif d'interface (4a, 4b, 4c, 4d) est mis à disposition sous forme de connexion Ethernet.

19. Procédé selon la revendication précédente, dans lequel la pluralité de connexions Ethernet est fixée par mise en circuit de modules d'application formant interface (20).

## Claims

1. An Ethernet switch, comprising a head device (1) with a crossbar device (7) and a number of interface modules (2a, 2b, 2c, 2d) subsequently connected by means of data lines (1, B1; 1, B2; 1, B3; 1, B4), each having a first number of a row (5a, 5b, 5c, 5d) of ports and a second number of a row (6a, 6b, 6c, 6d) of ports in such a manner that in each case the same one (51a, 51b, 51c, 51d) in the row (5a, 5b, 5c, 5d) of the first number of ports is connected to a switch control unit (3a, 3b, 3c, 3d) coupled to an interface device (4a, 4b, 4c, 4d), and the further ports (52a, 53a, 54a) of the row (5a, 5b, 5c, 5d) of the first number of ports are connected via data lines arranged in cascade to a port of the second number of the row (6a, 6b, 6c, 6d) of ports.

2. An Ethernet switch according to the preceding claim wherein the subsequent ports (52a, 53a, 54a) of the row (5a, 5b, 5c, 5d) of the first number of ports are each connected by means of at least one data line according to the row to the ports (61a, 62a, 63a) of the row (6a, 6b, 6c, 6d) of the second number of ports, beginning with the first (61a) in the row (6a, 6b, 6c, 6d) of the second number of ports.

3. An Ethernet switch according to one of the two preceding claims wherein the data lines (B1, B2, B3, B4) comprise bus lines.

4. An Ethernet switch according to the preceding claim wherein the crossbar device (7) comprises a plurality of bus lines which in the form of a star are connected to a switch control unit (3a, 3b, 3c, 3d) in each case.

5. An Ethernet switch according to one of the preceding claims wherein the head device (1) comprises an interface device (11) which is connected by means of a bus line directly or via a switch control unit (9) of the head device (1) to the crossbar device (7).

6. An Ethernet switch according to one of the preceding claims wherein the interface device (4a, 4b, 4c, 4d, 11) comprises a number of Ethernet interfaces.

7. An Ethernet switch according to one of the preceding claims, comprising at least one application interface module (20) for the specification of at least one interface (44a), connected to at least one interface device (4a, 4b, 4c, 4d, 11).

8. An Ethernet switch according to the preceding claim wherein the application interface module (20) is formed as an active, passive and / or (intermediate) storage module.

9. An Ethernet switch according to one of the preceding claims wherein each of the data lines (B1, B2, B3, B4) is formed as a separate four-pole G.Link connection.

10. An Ethernet switch according to one of the preceding claims wherein the crossbar device (7) comprises a PCI interface for switching on a management function device (8).

11. An Ethernet switch according to one of the preceding claims wherein the structure of the Ethernet switch is modular and / or can be extended.

12. An Ethernet switch according to one of the preceding claims 3 to 10 wherein the bus lines are serially arranged.

13. An interface module (2a, 2b, 2c, 2d) for use in an Ethernet switch according to one of the preceding claims, comprising:
a first number of a row (5a, 5b, 5c, 5d) of ports (51a, 52a, 53a, 54a, 51b, 51c, 51d) and a second number of a row (6a, 6b, 6c, 6d) of ports (61a, 62a, 63a, 64a) wherein
the first port (51a, 51b, 51c, 51d) in the row (5a, 5b, 5c, 5d) of the first number of ports (51a, 52a, 53a, 54a, 51b, 51c, 51d) is connected via at least one data line (2a, B1; 2b, B2; 2c, B3; 2d, B4) to a switch control unit (3a, 3b, 3c, 3d) connected to an interface device (4a, 4b, 4c, 4d) and wherein
the subsequent ports (52a, 53a, 54a) of the row (5a, 5b, 5c, 5d) of the first number of ports are each connected by means of at least one data line according to the row to the ports (61a, 62a, 63a, 64a) of the row (6a, 6b, 6c, 6d) of the second number of ports, beginning with the first (61a) in the row (6a, 6b, 6c, 6d) of the second number of ports.

14. An interface module according to the preceding claim wherein the interface device (4a, 4b, 4c, 4d, 11) comprises a number of Ethernet interfaces.

15. Interface device according to one of the two preceding claims wherein an interface specification of the interface device (4a, 4b, 4c, 4d) takes place through at least one application interface module (20) to be connected to the interface device.

16. An interface module according to one of the preceding claims 13 to 15 wherein data lines (B1, B2, B3, B4) are formed as separate and four-pole bus lines.

17. Method for providing a plurality of connectable interface devices (4a, 4b, 4c, 4d) wherein a crossbar device (7) which comprises a plurality of separate four-pole data lines (B1, B2, B3, B4) is connected to switch control units (3a, 3b, 3c, 3d) which can arranged modularly in a row, assigned to respective interface devices (4a, 4b, 4c, 4d), by means of a predefined data line (B1, B2, B3, B4) in each case and wherein each switch control unit (3a, 3b, 3c, 3d) is produced as part of an interface module (2a, 2b, 2c, 2d) in such a manner that the information to be transmitted from the crossbar device (7) to a subsequently connected interface module (2b, 2c, 2d) is fed via a cascade arrangement through the previously connected interface module (2a, 2b, 2c) in each case.

18. Method according to the preceding claim wherein the interface device (4a, 4b, 4c, 4d) is provided as an Ethernet connection.

19. Method according to the preceding claim wherein the plurality of Ethernet connections is determined through the connection of application interface modules (20).
